Europäisches Patentamt

European Patent Office

Office européen des brevets

(19)

(11) Veröffentlichungsnummer : **0 453 037 B1**

(12)    # EUROPÄISCHE PATENTSCHRIFT

(45) Veröffentlichungstag der Patentschrift :
**13.09.95 Patentblatt 95/37**

(51) Int. Cl.⁶ : **H04N 9/64**

(21) Anmeldenummer : **91200881.0**

(22) Anmeldetag : **15.04.91**

(54) Schaltungsanordnung zur Erkennung der Übertragungsnorm eines Farbfernsehsignals.

(30) Priorität : **20.04.90 DE 4012580**

(43) Veröffentlichungstag der Anmeldung :
**23.10.91 Patentblatt 91/43**

(45) Bekanntmachung des Hinweises auf die
Patenterteilung :
**13.09.95 Patentblatt 95/37**

(84) Benannte Vertragsstaaten :
**DE FR GB IT**

(56) Entgegenhaltungen :
**EP-A- 0 245 532**

(73) Patentinhaber : **Philips Patentverwaltung
GmbH
Wendenstrasse 35c
D-20097 Hamburg (DE)**
(84) **DE**
Patentinhaber : **Philips Electronics N.V.
Groenewoudseweg 1
NL-5621 BA Eindhoven (NL)**
(84) **FR GB IT**

(72) Erfinder : **Böhme, Siegfried
Holstenring 18
W-2000 Hamburg 50 (DE)**
Erfinder : **Gutsmann, Dieter
Ohmorring 33B
W-2000 Hamburg 61 (DE)**
Erfinder : **Treber, Hermann
Öjendorfer Weg 47
W-2000 Hamburg 74 (DE)**

(74) Vertreter : **von Laue, Hanns-Ulrich, Dipl.-Ing. et
al
Philips Patentverwaltung GmbH
Wendenstrasse 35c
D-20097 Hamburg (DE)**

## Beschreibung

Die Erfindung betrifft eine Schaltungsanordnung zur Erkennung der Übertragungsnorm eines Farbfernsehsignals, das einen Farbhilfsträger, dem Farbinformationen aufmoduliert sind, und Farbsynchronimpulse aufweist, in einem Farbdekoder.

Für Farbfernsehsignale existiert eine Fülle verschiedener Übertragungsnormen, welche sich insbesondere dadurch voneinander unterscheiden, in welcher Weise die Farbinformationen übertragen werden. Diese Farbinformationen sind einem Farbhilfsträger aufmoduliert, der jedoch je nach Norm verschiedene Frequenzen aufweisen kann und der außerdem eine von Bildzeile zu Bildzeile des Farbfernsehsignals alternierende Frequenz aufweisen kann. Auch sind die Farbinformationen selbst in verschiedener Weise aufmoduliert. Für Farbdekoder, die zur Dekodierung von Farbfernsehsignalen verschiedener Übertragungsnormen geeignet sein sollen, ergibt sich daraus das Problem, daß die Farbdekoder nicht nur zur Dekodierung der verschiedenen Übertragungsnormen geeignet sein müssen, sondern daß sie außerdem in der Lage sein müssen, zu erkennen, welche Übertragungsnorm das zu dekodierende Farbfernsehsignal aufweist.

Bekannte Schaltungsanordnungen zur Erkennung der Übertragungsnorm von Farbfernsehsignalen arbeiten im allgemeinen iterativ, d.h. sie schalten zunächst eine beliebige Norm ein, überprüfen dann, ob der Farbdekoder in der Lage ist, die Farbinformationen zu dekodieren und schalten, wenn dies nicht der Fall ist, auf eine nächste Norm. Diese Vorgehensweise wird solange fortgesetzt, bis der Farbdekoder auf eine Übertragungsnorm geschaltet ist, bei der eine richtige Dekodierung der Farbinformationen des Farbfernsehsignals erfolgt. Bei dieser Vorgehensweise wird also eine bestimmte Übertragungsnorm nicht unmittelbar erkannt, sondern es wird durch Ausprobieren verschiedener Dekodierungen schließlich die richtige Übertragungsnorm ermittelt. Hierzu wird eine gewisse Zeit benötigt, die insbesondere auch bei kurzen Unterbrechungen oder Störungen des Farbfernsehsignals störend in Erscheinung treten kann, da der Suchvorgang nach jeder Unterbrechung von neuem beginnt.

EP-A-0 245 532 offenbart die Verarbeitung eines FBAS-Signals, welches in den Fernsehstandards PAL, NTSC oder SECAM übertragen wurde.

Es ist Aufgabe der Erfindung, eine Schaltungsanordnung der eingangs genannten Art anzugeben, welche eine unmittelbare Erkennung der Übertragungsnorm eines zu dekodierenden Farbfernsehsignals gestattet.

Diese Aufgabe ist erfindungsgemäß dadurch gelöst, daß Mittel zur Bestimmung der Frequenz des Farbhilfsträgers vorgesehen sind, welche bei von Zeile zu Zeile des Farbfernsehsignals alternierender Frequenz des Farbhilfsträgers den Mittelwert der beiden Farbhilfsträgerfrequenzen bestimmten, daß in denjenigen Fällen, in denen die ermittelte und gegebenenfalls gemittelte Farbhilfsträgerfrequenz auch unter Berücksichtigung der bei Ermittlung der Farbhilfsträgerfrequenz gegebenen Meßungenauigkeit nur genau einer der zu erkennenden Normen zugeordnet werden kann, der Dekoder unmittelbar auf Dekodierung des Signals dieser Norm geschaltet wird, daß ferner Mittel vorgesehen sind, die die Vertikal-Ablenkfrequenz des Fernsehsignals ermitteln und die feststellen, ob der Farbhilfsträger eine von Zeile zu Zeile alternierende Phasenlage aufweist, und daß Mittel vorgesehen sind, die diese Informationen in denjenigen Fällen, in denen der ermittelten und gegebenenfalls gemittelten Farbhilfsträgerfrequenz nicht eindeutig eine bestimmte Norm zugeordnet werden kann, zur Erkennung der Norm des zu dekodierenden Farbfernsehsignals heranziehen und die den Dekoder auf die erkannte Norm einstellen.

Wie bereits erwähnt, unterscheiden sich die verschiedenen Übertragungsnormen für Farbfernsehsignale insbesondere dadurch, daß die Farbhilfsträger verschiedene Frequenzen aufweisen. Einige Normen weisen außerdem eine von Bildzeile zu Bildzeile des Farbfernsehsignals alternierende Frequenz des Farbhilfsträgers auf. In diesem Fall wird ein Mittelwert der beiden Farbhilfsträgerfrequenzen bestimmt.

Einige Übertragungsnormen weisen nun eine Farbhilfsträgerfrequenz bzw. einen Mittelwert beider Farbhilfsträgerfrequenzen auf, in deren bzw. dessen Nachbarschaft keine Farbhilfsträgerfrequenzen anderer Normen vorgesehen sind. In diesen Fällen kann unmittelbar aus der ermittelten Farbhilfsträgerfrequenz auf die vorliegende Übertragungsnorm geschlossen werden. Tatsächlich gibt es jedoch sehr viele weitere Übertragungsnormen, die identische oder nahe beieinanderliegende Farbhilfsträgerfrequenzen haben. In diesen Fällen genügt die Ermittlung der Farbhilfsträgerfrequenz alleine nicht, insbesondere da die Meßungenauigkeit bei der Ermittlung der Farbhilfsträgerfrequenz in diesen Fällen keinen sicheren Schluß auf die vorliegende Übertragungsnorm zuläßt, da nicht sicher ist, welche der sehr nahe beieinanderliegenden Farbhilfsträgerfrequenzen das zu dekodierende Fernsehsignal aufweist. Es ist daher in diesen Fällen vorgesehen, außerdem zu ermitteln, ob der Farbhilfsträger eine von Zeile zu Zeile alternierende Phasenlage aufweist und welche Vertikal-Ablenkfrequenz nach dem zu dekodierenden Farbfernsehsignal vorgesehen ist. Es stehen somit dann drei Parameter zur Verfügung, nämlich die ermittelte Farbhilfsträgerfrequenz, das Phasenverhalten des Farbhilfsträgers und die Vertikal-Ablenkfrequenz. Anhand dieser drei Parameter ist in denjenigen Fällen, in denen aus der ermittelten Farbhilfsträgerfrequenz nicht sicher auf eine bestimmte Übertragungsnorm geschlossen werden kann, eine Ermittlung der vorliegenden Übertragungsnorm möglich.

Bei dieser Schaltungsanordnung wird die Ermittlung der Übertragungsnorm des Farbfernsehsignals also durch Ermittlung verschiedener Parameter des Signals selbst vorgenommen, so daß eine unmittelbare Erkennung der Übertragungsnorm möglich ist, ohne die Kodierung verschiedener Normen "auszuprobieren". Es ist damit eine schnelle Erkennung der vorliegenden Übertragungsnorm gegeben. Dadurch, daß in den Fällen, in denen aus der ermittelten und bei alternierender Frequenz des Farbhilfsträgers gemittelten Frequenz des Farbhilfsträgers nicht eindeutig auf eine bestimmte Übertragungsnorm geschlossen werden kann, zwei weitere Parameter herangezogen werden, ist auch eine gute Störsicherheit bei der Erkennung gegeben.

Nach einer Ausgestaltung der Erfindung ist die Schaltungsanordnung in einem Farbdekoder, in welchem zur Demodulation der Farbinformationen ein Quadraturmischer und ein Mischeroszillator vorgesehen sind, dadurch gekennzeichnet, daß zur Bestimmung der gegebenenfalls gemittelten Frequenz des Farbhilfsträgers ein Phasendemodulator vorgesehen ist, dem die im Quadraturmischer erzeugten Differenzsignale zugeführt werden und dem ein Differenzierer nachgeschaltet ist, welcher ein Differenzsignal generiert, das während des Auftretens der Farbsynchronimpulse die Differenzfrequenz zwischen der Mischeroszillatorfrequenz und der gegebenenfalls gemittelten Farbhilfsträgerfrequenz des Farbfernsehsignals angibt, daß Mittel zur Generierung eines Offset-Signals vorgesehen sind, welches die Differenzfrequenz zwischen einer vorgewählten, festen Normierungsfrequenz und der eingestellten Mischeroszillatorfrequenz angibt, daß das Differenzsignal und das Offset-Signal unter Berücksichtigung ihrer Vorzeichen addiert werden, wobei der Wert dieser Summe die Differenzfrequenz zwischen der gegebenenfalls gemittelten Farbhilfsträgerfrequenz des zu dekodierenden Farbfernsehsignals und der Normierungsfrequenz angibt.

Da die Farbinformationen einem Farbhilfsträger aufmoduliert sind, ist es zur Verarbeitung der Farbinformationen beispielsweise in einem Farbempfänger notwendig, diese Farbinformationen wieder zu demodulieren, d.h. wieder in das Basisband zurückzusetzen. Da die Farbinformationen bei praktisch allen Übertragungsnormen in Form zweier Farbdifferenzsignale mit verschiedener Phasenlage und/oder Frequenzlage auf den Farbhilfsträger aufmoduliert sind, geschieht diese Demodulation im Farbdekoder im allgemeinen, zumindest bei einigen Normen, mittels eines Quadraturmischers, dem das zu dekodierende Farbfernsehsignal und das Ausgangssignal eines Mischeroszillators zugeführt werden. Der Mischeroszillator soll dabei auf der Frequenz des Farbhilfsträgers bzw. auf einer definierten Frequenz zwischen zwei von Zeile zu Zeile alternierenden Farbhilfsträgerfrequenzen schwingen. Dieses ist jedoch nur dann gewährleistet, wenn zuvor die richtige Übertragungsnorm erkannt wurde. Ist dies nicht der Fall, so arbeitet der Mischeroszillator auf einer beliebigen anderen Frequenz, beispielsweise der Farbhilfsträgerfrequenz einer anderen Übertragungsnorm.

Zur Bestimmung der Frequenz des Farbhilfsträgers des vorliegenden, zu dekodierenden Farbfernsehsignals ist für die erfindungsgemäße Schaltungsanordnung vorgesehen, daß die in dem Quadraturmischer erzeugten Differenzsignale einem Phasendemodulator zugeführt werden, dem wiederum ein Differenzierer nachgeschaltet ist. Dieser Differenzierer generiert ein frequenz-proportionales Signal, welches während der in den Farbfernsehsignalen vorgesehenen Farbsynchronimpulse die Differenzfrequenz zwischen der Mischeroszillatorfrequenz und der gegebenenfalls gemittelten Farbhilfsträgerfrequenz des Fernsehsignals angibt. Ist der Mischeroszillator bereits auf die richtige Frequenz des Farbhilfsträgers des zu dekodierenden Farbfernsehsignals eingestellt, so ist diese Differenzfrequenz Null, d.h. also die beiden Farbdifferenzsignale sind dann bereits in das Basisband umgesetzt. Wurde jedoch noch nicht die richtige Farbfernsehnorm erkannt bzw. arbeitet der Mischeroszillator noch nicht auf der Frequenz des Farbhilfsträgers des vorliegenden Farbfernsehsignals, so werden die Farbdifferenzsignale nicht in das Basisband umgesetzt, sondern es findet nur eine Umsetzung auf einen Träger einer anderen Frequenz statt. In diesem Fall liefert der Differenzierer dann ein Ausgangssignal, welches die Differenzfrequenz zwischen der Mischeroszillatorfrequenz und der Farbhilfsträgerfrequenz des Fernsehsignals angibt. Bei einem Signal mit zeilenweise alternierender Farbhilfsträgerfrequenz hat dieses Signal von Zeile zu Zeile wechselnde Werte, welche gemittelt werden.

Es sind ferner Mittel zur Generierung eines Offset-Signals vorgesehen. Dieses Offset-Signal orientiert sich zum einen an einer vorgewählten, festen Normierungsfrequenz und zum anderen an der eingestellten Mischeroszillatorfrequenz, die ja bekannt ist. Das Offset-Signal stellt die Differenzfrequenz zwischen dieser Normierungsfrequenz und der eingestellten Mischeroszillatorfrequenz dar.

Sowohl das Differenzsignal wie auch das Offset-Signal werden unter Berücksichtigung der auftretenden Vorzeichen miteinander addiert. Es entsteht damit ein Summensignal, das die Differenzfrequenz zwischen der gemittelten Farbhilfsträgerfrequenz des zu dekodierenden Farbfernsehsignals und der Normierungsfrequenz angibt. Da die Normierungsfrequenz einen festen Wert hat, kann aus diesem Summenwert unmittelbar auf die Farbhilfsträgerfrequenz geschlossen werden. Dieser Summenwert kann somit unmittelbar zur richtigen Einstellung der Frequenz des Mischeroszillators herangezogen werden. Dies geschieht jedoch nur dann, wenn diese Frequenz nur bei einer bestimmten Übertragungsnorm auftritt. Ist dies nicht der Fall, so werden, wie oben beschrieben, die weiteren Parameter Phasenverhalten und des Farbhilfsträgers und Vertikal-Ablenkfrequenz herangezogen.

Die Bestimmung des Phasenverhaltens des Farbhilfsträgers, d.h. also die Feststellung, ob dieser bezüglich seiner Phase von Bildzeile zu Bildzeile alterniert, ist vorteilhafterweise dadurch möglich, daß, wie nach einer weiteren Ausgestaltung der Erfindung vorgesehen ist, die Mittel zur Bestimmung der alternierenden Phase des Farbhilfsträgers einen Phasendetektor aufweisen, welcher bei alternierender Phase des Farbhilfsträgers von Zeile zu Zeile differierende Phasenlage feststellt.

Nach einer weiteren Ausgestaltung der Erfindung ist vorgesehen, daß zur Ermittlung der Vertikal-Ablenkfrequenz des Farbfernsehsignals ein Zähler vorgesehen ist, welcher die Zahl der Zeilen des Farbfernsehsignals zwischen zwei Vertikal-Synchronisationsimpulsen zählt, und daß aus der so ermittelten Zeilenzahl auf die Vertikal-Ablenkfrequenz des Farbfernsehsignals geschlossen wird.

Die Vertikal-Ablenkfrequenz kann indirekt dadurch ermittelt werden, daß festgestellt wird, wieviele Bildzeilen in dem zu dekodierenden Farbfernsehsignals zwischen zwei Vertikal-Synchronisationsimpulsen auftreten. Bei allen existierenden Farbfernsehnormen ist es so, daß Signale mit einer 50 Hz-Vertikalfrequenz 625 Zeilen und solche mit einer 60 Hz-Vertikal-Ablenkfrequenz 525 Zeilen pro Bild aufweisen. Somit kann aus der Zeilenzahl eines Bildes auf die vorliegende Vertikal-Ablenkfrequenz geschlossen werden.

Nach einer Ausgestaltung der Erfindung ist vorgesehen, daß die Normierungsfrequenz so gewählt wird, daß sie etwa einen Mittelwert der verschiedenen Farbhilfsträgerfrequenzen der zu erkennenden Normen darstellt. Eine solche Wahl der Normierungsfrequenz ist vorteilhaft, da auf diese Weise das Offset-Signal relativ kleine Werte annimmt.

Im allgemeinen ist in Farbdekodern ohnehin ein Phasendemodulator vorgesehen, dem die demodulierten Farbdifferenzsignale zugeführt werden, um den Mischeroszillator bezüglich der Phase relativ zur Phasenlage des Farbhilfsträgers nachzuregeln. Ein solcher, in dem Dekoder an sich für die Phasenregelung vorgesehener Phasendemodulator kann jedoch, wie nach einer weiteren Ausgestaltung der Erfindung vorgesehen ist, gleichzeitig auch in der erfindungsgemäßen Schaltungsanordnung zur Bestimmung des Differenzsignals herangezogen werden.

Nach einer weiteren Ausgestaltung der Erfindung ist vorgesehen, daß jeweils mehrere Normen, die nahe beieinanderliegende Farbhilfsträgerfrequenzen haben, zu einer Normen-Gruppe zusammengefaßt werden, daß die Bestimmung der Frequenz des Farbhilfsträgers des Farbfernsehsignals nur mit solcher Genauigkeit vorgenommen wird, daß bestimmbar ist, zu welcher Farbstandard-Gruppe das zu dekodierende Fernsehsignal gehört, und daß zur Erkennung der richtigen Norm innerhalb der Normen-Gruppe die ermittelte Vertikal-Ablenkfrequenz sowie das Phasenverhalten des Farbhilfsträgers herangezogen werden.

Mehrere der bekannten Übertragungsnormen für Farbfernsehsignale weisen sehr nahe beieinanderliegende Frequenzen der Farbhilfsträger auf. In diesen Fällen ist die Erkennung der Norm kritisch, da die Frequenzen der Farbhilfsträger schwanken können. In solchen Fällen wird vorteilhafterweise die ermittelte und gegebenenfalls gemittelte Frequenz des Farbhilfsträgers nicht direkt zur Bestimmung der Übertragungsnorm herangezogen, sondern es werden Phasenverhalten des Farbhilfsträgers und Vertikalablenkfrequenz mit herangezogen. Da eine sichere Erkennung der vorliegenden Übertragungsnorm anhand der Frequenz des Farbhilfsträgers bei derartigen Normen mit sehr nahe beieinanderliegenden Frequenzen der Farbhilfsträger ohnehin nicht sicher möglich ist, können diese Übertragungsnormen vorteilhafterweise zu einer Normen-Gruppe zusammengefaßt werden. Die Bestimmung der Frequenz des Farbhilfsträgers des Farbfernsehsignals braucht dann nur mit einer solchen Genauigkeit zu erfolgen, daß feststellbar ist, ob ein vorliegendes Farbfernsehsignal zu dieser Normengruppe gehört oder nicht, d.h. also die Schaltungsanordnung braucht bei der Ermittlung der Frequenz des Farbhilfsträgers nur mit einer solchen Genauigkeit arbeiten, daß feststellbar ist, ob die Frequenz eines Farbhilfsträgers in dem Frequenzbereich liegt, der von den Farbträgern der verschiedenen Normen dieser Gruppe abgedeckt wird.

Für die Erzeugung des oben beschriebenen Offset-Signals bedeutet dies, daß, wie nach einer weiteren Ausgestaltung der Erfindung vorgesehen ist, für eine Normen-Gruppe nur ein gemeinsames Offset-Signal in der Weise generiert wird, daß, wenn der Mischoszillator auf eine der Farbhilfsträgerfrequenzen der Norm dieser Gruppe eingestellt ist, das Offset-Signal die Differenzfrequenz zwischen der vorgewählten, festen Normierungsfrequenz und einem mittleren Wert der Farbhilfsträgerfrequenzen der Normen dieser Gruppe angibt.

Da in dem oben beschriebenen Fall die Bestimmung der Frequenz des Farbhilfsträgers nur mit hinreichender Genauigkeit zur Identifizierung einer Normen-Gruppe erfolgen muß, genügt es für das Offset-Signal, daß es nicht für jede Übertragungsnorm dieser Gruppe getrennt generiert wird, sondern daß vielmehr ein gemeinsames Offset-Signal erzeugt wird, welches die Differenz zwischen der vorgewählten, festen Normierungsfrequenz und einen mittleren Wert der Farbhilfsträgerfrequenzen der Normen der jeweiligen Gruppe angibt. Das oben beschriebene Summensignal weist dann immer noch eine hinreichende Genauigkeit auf, um festzustellen, ob die Farbhilfsträgerfrequenz eines zu dekodierenden Farbfernsehsignals in den Frequenzbereich der Farbhilfsträger einer Normengruppe fällt oder nicht.

**4**

Auch die Auswertung des Summensignals aus Differenzsignal und Offset-Signal braucht, wie nach einer Ausgestaltung der Erfindung weiterhin vorgesehen ist, nur mit einer solchen Genauigkeit vorgenommen werden, daß festgestellt werden kann, zu welcher Normen-Gruppe das Farbfernsehsignal gehört.

In all denjenigen Fällen, in denen die Bestimmung der gegebenenfalls gemittelten Frequenz des Farbhilfsträgers nur mit einer solchen Genauigkeit vorgenommen wird, daß er einer der Normengruppen zugehört, wird die Erkennung der vorliegenden Übertragungsnorm mit Hilfe der zwei weiteren Parameter vorgenommen, nämlich der Feststellung, ob der Farbträger bezüglich seiner Phase von Bildzeile zu Bildzeile alterniert und welche Vertikal-Ablenkfrequenz vorliegt. Anhand der dann vorliegenden drei Paramter, nämlich der Zugehörigkeit der Farbträgerfrequenz zu einer bestimmten Normen-Gruppe und der weiteren zwei Parameter ergibt sich dann die vorliegende Übertragungsnorm. Sobald diese feststeht, ist dann eine Einstellung des Farbdekoders auf die exakte Farbhilfsträgerfrequenz der vorliegenden Norm möglich.

Nach einer weiteren Ausgestaltung der Erfindung ist vorgesehen, daß es sich bei dem Farbfernsehsignal um ein digitales Signal und bei der Schaltungsanordnung zur Erkennung der Übertragungsnorm um eine digitale Schaltungsanordnung handelt. Die erfindungsgemäße Schaltungsanordnung ist insbesondere für Digitalfernsehsignal vorteilhaft einsetzbar, da sie mit Schaltungselementen arbeitet, die in digitaler Weise leicht realisierbar sind.

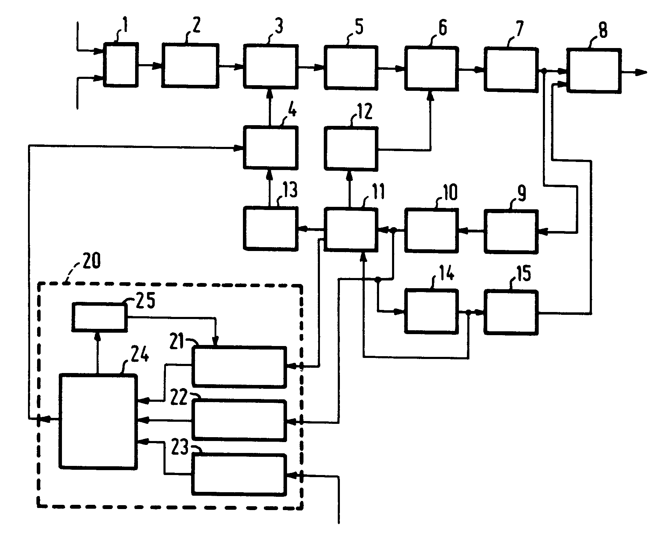

Im folgenden wird ein in der Figur schematisch in Form eines Blockschaltbildes dargestelltes Ausführungsbeispiel der Erfindung näher erläutert.

Das Blockschaltbild gemäß der Figur zeigt einen digitalen Farbdekoder mit der erfindungsgemäßen, ebenfalls digital arbeitenden Schaltungsanordnung zur Erkennung der Übertragungsnorm eines digitalen Farbfernsehsignals.

In der Figur sind diejenigen Blöcke abgerundet dargestellt, welche in einem Farbdekoder ohnehin vorhanden sind, selbst jedoch eine Erkennung der Übertragungsnorm eines Farbfernsehsignals nicht gestatten. In eckigen Blöcken sind dagegen die Schaltungselemente dargestellt, welche für die erfindungsgemäße Schaltungsanordnung zusätzlich erforderlich sind. Wie im folgenden näher erläutert werden wird, werden einige der abgerundet dargestellten Schaltungselemente des Farbdekoders, die in diesem ohnehin vorhanden sind, zusätzlich auch zur Erkennung der Übertragungsnorm herangezogen.

Einem eingangsseitigen Multiplexer 1 des Dekoders gemäß der Figur kann entweder ein reines auf einen Farbhilfsträger aufmoduliertes Farbsignal oder ein vollständiges Farbfernsehsignal mit Luminanzsignal, auf einen Farbhilfsträger aufmodulierten Farbinformationen, Austastlücken, sowie Synchronisationsimpulsen, also ein sogenanntes FBAS-Signal, zugeführt sein.

In einem dem Multiplexer 1 nachgeschalteten Hochpaßfilter 2, werden in einem FBAS-Signal die Luminanzsignalanteile, insbesondere die relativ niederfrequenten Anteile dieses Signals, unterdrückt. Dieses Hochpaßfilter muß jedoch so ausgelegt sein, daß der Farbhilfsträger und eventuell auftretende Seitenbänder noch nicht unterdrückt werden. Dem Hochpaßfilter 2 ist ein Quadraturmischer 3 nachgeschaltet, welchem außerdem das Ausgangssignal eines Mischeroszillators 4 zugeführt ist. In dem Quadraturmischer 3 soll eine Demodulation der auf einen Farbhilfsträger aufmodulierten Farbinformationen erfolgen. Dazu ist, wie noch weiter auszuführen sein wird, die Oszillationsfrequenz des Mischeroszillators 4 auf die Frequenz des Farbhilfsträgers des zu dekodierenden Farbfernsehsignals einzustellen. Ein Quadraturmischer ist erforderlich, da die Farbinformationen in einigen Übertragungsnormen in Form zweier Farbdifferenzsignale mit verschiedener Phasenlage auf einen Farbhilfsträger aufmoduliert sind. In dem Quadraturmischer 3 werden dann diese beiden Farbdifferenzsignale demoduliert.

Da in dem Quadraturmischer nicht nur die gewünschten Differenzsignale, die die demodulierten Farbdifferenzsignale darstellen, sondern auch die entsprechenden Summensignale auftreten, ist dem Quadraturmischer 3 ein Tiefpaßfilter 5 nachgeschaltet, welches die in dem Mischer entstandenen Summensignale unterdrückt. Diesem Tiefpaßfilter 5 ist ein Verstärker 6 mit veränderbarem Verstärkungsfaktor nachgeschaltet, welcher dazu dient, die Farb-Signale in dem Dekoder auf einem Sollwert zu halten. Dem Verstärker 6 ist ein weiteres Tiefpaßfilter 7 nachgeschaltet, welches die gleiche Aufgabe hat wie das Tiefpaßfilter 5. Die das Tiefpaßfilter 7 verlassenden Farbdifferenzsignale sind einer Zeilenverzögerungsvorrichtung 8 zugeführt, welche je nach vorliegender Übertragungsnorm eine zeilenweise Verzögerung der Farbinformationen vornimmt. Am Ausgang der Zeilenverzögerungsvorrichtung 8 sind dann die beiden Farbdifferenzsignale beispielsweise bei Übertragung eines SECAM-Signals zeitgleich bzw. bei Übertragung eines PAL-Signals von Phasenfehlern bereinigt vorhanden.

In diesem in der Figur dargestellten Farbdekoder muß für Signale solcher Übertragungsnormen, bei denen die Farbinformationen einem Farbhilfsträger in Amplitudenmodulation aufmoduliert sind, laufend eine Nachregelung der Phasenlage des Ausgangssignals des Mischeroszillators in bezug auf die Phasenlage des Farbhilfsträgers des Farbfernsehsignals vorgenommen werden. Darüber hinaus muß für Signale aller Übertragungsnormen eine Amplitudenregelung vorgenommen werden. Diese Phasen- bzw. Amplitudenregelung wird mittels der folgenden Schaltungsblöcke vorgenommen:

Das Ausgangssignal des Tiefpaßfilters 7 ist einem Farbträger-Deemphase-Filter 9 zugeführt, welches nur für SECAM-Signale wirksam ist. Dieses Filter wird üblicherweise als "Cloche-Filter" bezeichnet. Dem Filter 9 ist ein Phasendemodulator 10 nachgeschaltet, der nicht nur eine Phasendemodulation sondern auch eine Amplitudendetektion der ihm zugeführten Farbdifferenzsignale vornimmt. Der Phasendemodulator liefert somit zwei Ausgangssignale, welche Aussagen bezüglich Phasenlage und bezüglich Amplitude darstellen. Diese Signale sind einem Farbsynchronimpuls-Detektor 11 zugeführt, welcher die ihm von dem Phasendetektor 10 zugeführten Signale während derjenigen Zeiten auswertet, in denen in den Farbdifferenzsignalen ein Farbsynchronisationsimpuls auftreten, da nur diese Farbsynchronisationsimpulse eine definierte Phasenlage und einen definierten Pegel aufweisen. Der Farbsynchronimpuls-Detektor 11 vergleicht die von dem Phasendetektor 10 gelieferte Amplitudeninformation während der Farbsynchronimpulse mit einem Amplitudensollwert und gibt bei Abweichung von diesem Sollwert entsprechende Signale an ein Amplituden-Schleifenfilter 12. Das Ausgangssignal dieses Schleifenfilters 12 wird zur Steuerung des Verstärkungsfaktors des Verstärkers 6 herangezogen. Die Auslegung des Amplituden-Schleifenfilters 12 bestimmt das Nachregelverhalten der Gesamtanordnung bezüglich der Amplitude.

In dem Farbsynchronimpuls-Detektor 11 wird außerdem während derjenigen Zeiten, in denen ein Farbsynchronisationsimpuls in den Farbdifferenzsignalen auftreten, eine Auswertung der Phasenlage des Farbträgers vorgenommen. Diese Signale sind einem Phasen-Schleifenfilter 13 zugeführt. Die Ausgangssignale des Filters 13 wiederum sind auf den Farbträgeroszillator 4 geführt, welcher bezüglich der Phasenlage seines Ausgangssignals durch diese Signale gesteuert wird. Die Auslegung des Phasen-Schleifenfilters 13 bestimmt das Nachregelverhalten der Schaltungsanordnung bezüglich der Phasenlage des Ausgangssignals des Mischeroszillators 4.

Die von dem Phasendemodulator 10 gelieferten Signale werden außerdem einem Differenzierer 14 zugeführt, dessen Ausgangssignal zum einen auf den Farbsynchronimpuls-Detektor 11 und zum anderen auf ein SECAM-Video-Deemphasis-Filter 15 geführt ist, welches dazu dient, die gemäß der SECAM-Norm vorgesehene Video-Deemphasis vorzunehmen. Die Ausgangssignale des Filters 15 sind der Zeilenverzögerungsvorrichtung 8 zugeführt.

Die bisher beschriebenen Elemente des Dekoders gemäß der Figur sind in diesem Dekoder ohnehin vorhanden und erlauben per se noch nicht eine Erkennung der Übertragungsnorm des in den Dekoder eingespeisten Farbfernsehsignals. Für eine solche Erkennung ist vielmehr eine Anordnung 20 zur Farbstandarderkennung vorgesehen.

In der Anordnung 20 ist ein Frequenzbereichsdetektor 21 vorgesehen, dem von dem Farbsynchronimpuls-Detektor 11 während derjenigen Zeiten, in denen in den Farbdifferenzsignalen Farbsynchronimpulse auftreten, die von dem Differenzierer 14 gelieferten Ausgangssignale zugeführt werden. Der Frequenzbereichsdetektor 21 erhält somit während jedes Farbsynchronimpulses das Ausgangssignal des Differenzierers 14.

In der Anordnung 20 zur Farbstandarderkennung ist außerdem ein Phasendetektor 22 vorgesehen, welcher die von dem Phasendetektor 10 des Dekoders gelieferten Phasenmeßsignale erhält.

In der Anordnung 20 ist ferner ein Vertikal-Frequenzdetektor 23 vorgesehen, welcher von einer in der Figur nicht dargestellten Synchronisations-Schaltung ein Signal erhält, welches angibt, wann in dem Farbfernsehsignal Vertikal-Synchronisationsimpulse auftreten.

Die Ausgangssignale des Frequenzbereichsdetektors 21, des Phasendetektors 22 und des Vertikalfrequenzdetektors 23 werden einer Auswerteeinheit 24 zugeführt. Ein Ausgangssignal der Auswerteeinheit 24 wird einer Anordnung 25 zur Generierung des Offset-Signals zugeführt, deren Ausgangssignal wiederum dem Frequenzbereichsdetektor 21 zugeführt wird.

Im folgenden wird die Anordnung 20 zur Farbstandarderkennung mit ihren Blockelementen 21 bis 25 bezüglich ihrer Funktionsweise näher erläutert.

Es wird dabei davon ausgegangen, daß dem Multiplexer 1 des Farbdekoders ein FBAS-Signal zugeführt wird, dessen Übertragungsnorm unbekannt ist. Dies bedeutet mit hoher Wahrscheinlichkeit, daß der Farbträger-Oszillator 4 bezüglich der Frequenz seines Ausgangssignals, das dem Quadraturmischer 3 zugeführt wird, nicht auf die Frequenz des Farbträgers des zu dekodierenden Farbfernsehsignals eingestellt ist. Dies hat zur Folge, daß die Farbdifferenzsignale nicht demoduliert sondern nur auf eine andere Trägerfrequenz umgesetzt werden. Dies wiederum hat zur Folge, daß der Phasendemodulator 10 eine sich laufend ändernde Phasenlage feststellt, welche in dem Differenzierer 14 in ein Frequenzsignal umgewandelt wird, welches diejenige Trägerfrequenz angibt, auf die die beiden Farbdifferenzsignale nunmehr mittels des Mischers 3 umgesetzt wurden. Diese Frequenz ist identisch mit der Differenzfrequenz zwischen der Mischeroszillatorfrequenz und der Frequenz des Farbhilfsträgers des Farbfernsehsignals. Dieses Signal wird in dem Farbsynchronimpuls-Detektor 11 während derjenigen Zeiten ausgewertet, in denen die Farbdifferenzsignale Farbsynchronimpulse aufweisen, da nur während dieser Zeiten eine definierte Frequenz und Phasenlage des Farbhilfsträgers gegeben ist.

Dieses so ausgewertete Differenzsignal wird dem Frequenzbereichsdetektor 21 der Anordnung 20 zur Farbstandarderkennung zugeführt.

Die Auswerteeinheit 24 der Anordnung 20 hat zuvor ein Signal an den Farbträgeroszillator 4 gegeben, mittels dessen in dem Farbträgeroszillator 4 eine bestimmte Frequenz des Oszillators eingestellt wurde. Wie oben bereits ausgeführt, soll jedoch zunächst davon ausgegangen werden, daß diese Frequenz nicht identisch ist mit der Frequenz des Farbhilfsträgers des zu dekodierenden Farbfernsehsignals. Die Auswerteeinheit 24 liefert ein Signal an die Anordnung 25, welches angibt, auf welche Frequenz der Farbträgeroszillator 4 eingestellt wurde. In der Anordnung 25 wird ein Offset-Signal generiert, welches die Differenzfrequenz zwischen einer vorgewählten, festen Normierungsfrequenz und der von der Auswerteeinheit 24 mitgeteilten eingestellten Mischeroszillatorfrequenz angibt. Diese Normierungsfrequenz, die einmal vorgegeben wird und dann unverändert bleibt, wird vorteilhafterweise so gewählt, daß sie etwa in der Mitte des Frequenzbereichs der verschiedenen Farbhilfsträgerfrequenzen der Übertragungsnormen liegt. Das in der Anordnung 25 generierte Offset-Signal wird dem Frequenzbereichsdetektor 21 zugeführt.

In dem Frequenzbereichsdetektor 21 wird nun eine Summenbildung des von der Anordnung 25 gelieferten Offset-Signals und des von dem Farbsynchron-Impulsdetektor 11 gelieferten Differenzsignals vorgenommen, wobei deren Vorzeichen zu berücksichtigen sind. Ferner wird in denjenigen Fällen, in denen das Differenzsignal von Bildzeile zu Bildzeile alternierende Werte aufweist, da der Farbhilfsträger in seiner Frequenz zeilenweise alterniert, eine Mittelung des Differenzsignals über zwei Zeilen vorgenommen. Bei der Summenbildung entsteht ein Signal, welches die Differenzfrequenz zwischen der gegebenenfalls gemittelten Farbhilfsträgerfrequenz des zu dekodierenden Farbsignals und der festen, bekannten Normierungsfrequenz angibt. Anhand dieses Signals, das an die Auswerteeinheit 24 weitergeführt wird, ist diese in der Lage, unmittelbar auf die gegebenenfalls gemittelte Farbhilfsträgerfrequenz des Fernsehsignals und aus dieser auf die Übertragungsnorm und damit auf die im Oszillator 4 einzustellende Frequenz zu schließen, da ja die Frequenz des Normierungssignals bekannt ist.

Nachdem nun die Auswerteeinheit 24 diejenige Frequenz ermittelt hat, auf die der Farbträger-Oszillator 4 einzustellen ist, kann diese Einstellung des Farbträger-Oszillators entweder unmittelbar erfolgen, oder es werden weitere, von dem Phasendetektor 22 und von dem Vertikal-Frequenzdetektor 23 gelieferte Parameter ausgewertet. Ob dies geschieht oder nicht hängt davon ab, ob die ermittelte Farbträgerfrequenz, auf die der Oszillator 4 eingestellt werden soll, nur in einer Übertragungsnorm vorgesehen ist. Ist dies der Fall, so kann der Farbträgeroszillator mittels der Auswerteeinheit 24 unmittelbar auf diese Frequenz eingestellt werden, da eindeutig feststeht, welche Übertragungsnorm vorliegt.

Ist die ermittelte Farbträger-Frequenz jedoch in mehreren Übertragungsnormen vorgesehen bzw. sind in mehreren Übertragungsnormen dieser Frequenz eng benachbarte Farbhilfsträgerfrequenzen vorgesehen, so genügt die Ermittlung der Farbhilfsträgerfrequenz alleine noch nicht. In diesen Fällen zieht die Auswerteeinheit 24 die von dem Phasendetektor 22 und dem Vertikalfrequenzdetektor 23 gewonnenen Signale zur Erkennung der Übertragungsnorm des zu dekodierenden Farbfernsehsignals mit heran.

Dem Phasendetektor 22 ist das Ausgangssignal des Phasendemodulators 10 zugeführt. Aus diesem Signal ermittelt der Phasendetektor 22, ob eines der beiden Farbdifferenzsignale, das dem Phasendemodulator 10 zugeführt ist, eine von Bildzeile zu Bildzeile alternierende Phasenlage aufweist. Ist dies der Fall, so gibt der Phasendetektor 22 ein entsprechendes Signal an die Auswerteeinheit 24.

In dem Vertikalfrequenzdetektor 23 ist ein in der Figur nicht dargestellter Zähler vorgesehen, mittels dessen die Zahl der Bildzeilen zwischen zwei Vertikal-Synchronisationsimpulsen gezählt wird. Aus der Zahl der Bildzeilen zwischen diesen Impulsen kann unmittelbar auf die Vertikal-Ablenkfrequenz des Farbfernsehsignals geschlossen werden, da alle Übertragungsnormen, welche mit einer Ablenkfrequenz von 50 Hz arbeiten, nominal 625 Zeilen pro Vollbild aufweisen, während sämtliche Übertragungsnormen, die mit einer Vertikal-Ablenkfrequenz von 60 Hz arbeiten, nominal 525 Zeilen pro Vollbild aufweisen. Es ist also aus der Zahl der Bildzeilen pro Vollbild ein unmittelbarer Schluß auf die Vertikal-Ablenkfrequenz des Signals möglich. Der Vertikal-Frequenzdetektor 23 gibt ein entsprechendes Signal an die Auswerteeinheit 24.

In denjenigen Fällen, in denen aus der ermittelten und gegebenenfalls gemittelten Frequenz des Farbhilfsträgers kein unmittelbarer sicherer Schluß auf die vorliegende Übertragungsnorm möglich ist, wertet die Auswerteeinheit 24 nicht nur die ermittelte Farbträgerfrequenz aus, sondern auch die von dem Phasendetektor 22 und dem Vertikal-Frequenzdetektor 23 gelieferten Signale, d.h. also eine eventuell festgestellte zeilenweise alternierende Phasenlage des Farbhilfsträgers bzw. die festgestellte Vertikal-Ablenkfrequenz Aus diesen drei Informationen kann in der Auswerteeinheit 24 unmittelbar und ausnahmslos auf die vorliegende Übertragungsnorm des Farbfernsehsignals geschlossen werden, da die bekannten Übertragungsnormen sich immer in wenigstens einem der drei Parameter unterscheiden, und es kann ein entsprechendes Signal nicht nur an den Farbträger-Oszillator 4 gegeben werden, sondern auch, in in der Figur nicht dargestellter Weise, an bestimmte Schaltungselemente des Farbdekoders bzw. anderer Schaltelemente eines in der Figur nicht dargestellten

7

Farbempfängers gegeben werden, um diesen auf die vorliegende Übertragungsnorm einzustellen.

Wie oben bereits erwähnt wurde, gibt es mehrere Farbfernseh-Übertragungsnormen, in welchen sehr ähnliche Farbhilfsträgerfrequenzen vorgesehen sind. Da diese Farbhilfsträgerfrequenzen im praktischen Betrieb auch noch schwanken können, kann es daher in diesen Fällen, oder wenn die Signale durch Rauschen gestört sind, zu Erkennungsschwierigkeiten kommen. In diesen Fällen ist es vorteilhaft, mehrerer solcher Übertragungsnormen zu einer Normengruppe zusammenzufassen. Für die in der Figur dargestellte Schaltungsanordnung bedeutet dies konkret, daß in der Anordnung 25 zur Generierung des Offset-Signals für eine solche Normen-Gruppe nur ein gemeinsames Offset-Signal erzeugt wird. D.h. also, daß, wenn mittels der Auswerteinheit 24 eine der Farbhilfsträgerfrequenzen dieser Normen-Gruppe im Farbträger-Oszillator 4 eingestellt wurde, die Anordnung 25 in jedem Falle unabhängig davon, welche der Farbhilfsträgerfrequenzen der Normen dieser Gruppe eingestellt wurde, nur ein Offset-Signal generiert. Dieses Offset-Signal ist so ausgelegt, daß es die Differenzfrequenz zwischen der vorgewählten festen Normierungsfrequenz und einem mittleren Wert der Farbhilfsträgerfrequenzen der Normen dieser Gruppe angibt. Es wird also für alle in dem Farbträgeroszillator 4 eingestellten Farbhilfsträgerfrequenzen dieser Normengruppe nur ein gemeinsames Offset-Signal generiert. In dem Frequenzbereichsdetektor 21 kann darüber hinaus vorgesehen sein, daß die Berechnung des Summenwertes des von der Anordnung 25 gelieferten Offset-Signals und des von dem Phasendetektor 10 gelieferten Differenzsignals nur mit verringerter Genauigkeit vorgenommen wird. In jedem Falle wird, wenn eine solche Normen-Gruppenbildung vorgesehen ist, die Bestimmung der gegebenenfalls gemittelten Frequenz des Farbhilfsträgers des in den Detektor eingespeisten Farbhilfssignals nur noch mit einer solchen Genauigkeit vorgenommen, daß feststellbar ist, zu welcher Normen-Gruppe das Farbfernsehsignal gehört. Es muß dann also nicht mehr die genaue Frequenz des Farbhilfsträgers des eingespeisten Farbfernsehsignals festgestellt werden, sondern es genügt, festzustellen, ob die Frequenz des Farbhilfsträgers in den Frequenzbereich der Farbhilfsträger einer Normen-Gruppe fällt. In diesen Fällen ist neben der Auswertung des Frequenzbereiches außerdem die Auswertung des Phasenverhaltens des Farbträgers und der Vertikal-Ablenkfrequenz erforderlich. Der Vorteil dieser Vorgehensweise besteht darin, daß die Bestimmung der Frequenz des in den Dekoder eingespeisten Farbhilfsträgers mit verminderter Genauigkeit erfolgen kann, welche jedoch noch hinreichend sein muß, um zu erkennen, zu welcher Normen-Gruppe das eingespeiste Signal gehört.

Für die folgenden Farbfernseh-Übertragungsnormen kann die oben erwähnte Bildung von Normen-Gruppen z.B. in folgender Weise vorgenommen werden:

| 1. Gruppe: | PAL BG | 4.4 | 50 Hz |
|---|---|---|---|
| | NTSC | 4.4 | 50 Hz |
| | NTSC | 4.4 | 60 Hz |

| 2. Gruppe: | PAL N | 3,582 | 50 Hz |
|---|---|---|---|
| | PAL M | 3,576 | 60 Hz |
| | NTSC M | 3,579 | 60 Hz |

In diesem Beispiel weisen die Farbhilfsträger der Übertragungsnormen der ersten Gruppe die gleiche Frequenz auf, nämlich 4,4 MHz. Bei Ermittlung einer solchen Frequenz des Farbhilfsträgers ist damit noch nicht klar, welche der Übertragungsnormen der ersten Gruppe vorliegt. Diese Signale können jedoch durch die weiteren Parameter unterschieden werden. So weist das PAL-Signal eine von Bildzeile zu Bildzeile alternierende Phase des Farbhilfsträgers auf. Die beiden NTSC-Signale weisen konstante Phasenlage des Farbhilfsträgers auf, unterscheiden sich jedoch bezüglich der Vertikal-Ablenkfrequenz.

Die Übertragungsnormen der zweiten Gruppe weisen zwar unterschiedliche Frequenzen der Farbhilfsträger auf, diese liegen jedoch so nahe beieinander, daß eine sichere Unterscheidung insbesondere auch bei schwankenden Frequenzen des Farbhilfsträgers nicht immer gewährleistet ist. Es werden daher auch in diesem Falle die weiteren Parameter Phasenverhalten des Farbträgers und Vertikal-Ablenkfrequenz herangezogen.

Soll neben diesen sechs Übertragungsnormen noch weiterhin beispielsweise die SECAM-Norm erkannt werden, bei der der Farbhilfsträger während der Farbsynchronimpulse eine zeilenweise alternierende Frequenz von 4,25 MHz bzw. 4,406 MHz aufweist, so muß diese Übertragungsnorm nicht einer der oben genannten Gruppen zugeordnet werden, sondern kann vielmehr direkt erkannt werden, da für ein Signal dieser Norm mit zwei verschiedenen Farbhilfsträgerfrequenzen ein über zwei Bildzeilen des Farbfernsehsignals gemittelter Wert der beiden Farbhilfsträger-Ruhefrequenzen ermittelt wird, welcher sich in hinreichendem Maße von den durch die Farbhilfsträger der beiden oben genannten Gruppen abgedeckten Frequenzbereichen unterscheidet. Wird also in diesem Beispielsfalle eine gemittelte Farbhilfsträgerfrequenz von 4,328 MHz erkannt, so kann die Auswerteeinheit 24 unmittelbar den Mischeroszillator 4 sowie weitere Elemente des Dekoders bzw. auch Farbempfängers auf die SECAM-Norm schalten. Wird jedoch entweder eine Farbhilfsträgerfrequenz von 4,4 MHz oder eine solche von etwa 3,58 MHz erkannt, so werden die beiden weiteren Parameter zur Erkennung der Übertragungsnorm herangezogen.

Für die oben genannten Gruppen von Farbfernseh-Übertragungsnormen sowie für die Übertragungsnorm SECAM können das Differenzsignal sowie das Offset-Signal beispielsweise so gebildet werden, daß ein Differenzfrequenzbereich zwischen der Mischeroszillatorfrequenz und der Farbhilfsträgerfrequenz des zu dekodierenden Farbsignals von ± 1,6875 MHz einem Digitalwertbereich des Differenzsignals von ± 2,048 entspricht und daß als Offset-Signal für die erste Farbfernseh-Übertragungsnormen-Gruppe ein Digitalwert von 575, für die zweite ein Wert von - 460 sowie für das SECAM-Signal ein Digitalwert von 397 vorgesehen wird. Aus der Addition dieser Werte kann dann unabhängig von der eingestellten Oszillatorfrequenz darauf geschlossen werden, welche Frequenz der Farbhilfsträger des empfangenen Fernsehsignals aufweist. Da es ausreicht, zu erkennen, ob der Farbhilfsträger des empfangenen Farbfernsehsignals die Farbhilfsträgerfrequenz der SECAM-Norm aufweist, oder ob er einer der beiden Normen-Gruppen zuzuordnen ist, kann die Summenbildung des Differenzsignals und des Offset-Signals mit verminderter Genauigkeit vorgenommen bzw. ausgewertet werden. Sind die oben genannten Digitalwerte binär codiert, so genügt es für die Auswertung der Summe das höchstwertige Bit sowie das zweithöchstwertige Bit auszuwerten. In dem oben genannten Beispielsfall liegt dann eine Übertragungsnorm der ersten Gruppe vor, wenn das höchstwertige Bit den Wert 1 und das zweithöchstwertige Bit den Wert Null hat. Hat das höchstwertige Bit dagegen den Wert Null und das zweithöchstwertige Bit den Wert 1 so kann auf ein Fernsehsignal der SECAM-Norm geschlossen werden. Sind dagegen die beiden Bitwerte Null, so liegt eine Übertragungsnorm der zweiten Gruppe vor.

## Patentansprüche

1.  Schaltungsanordnung zur Erkennung der Übertragungsnorm eines Farbfernsehsignals, das einen Farbhilfsträger, dem Farbinformationen aufmoduliert sind, und Farbsynchronimpulse aufweist, in einem Farbdekoder,
    dadurch gekennzeichnet, daß Mittel (14, 21, 24, 25) zur Bestimmung der Frequenz des Farbhilfsträgers vorgesehen sind, welche bei von Zeile zu Zeile des Farbfernsehsignals alternierender Frequenz des Farbhilfsträgers den Mittelwert der beiden Farbhilfsträgerfrequenzen bestimmen, daß in denjenigen Fällen, in denen die ermittelte und gegebenenfalls gemittelte Farbhilfsträgerfrequenz auch unter Berücksichtigung der bei der Ermittlung der Farbhilfsträgerfrequenz gegebenen Meßungenauigkeit nur genau einer der zu erkennenden Übertragungsnormen zugeordnet werden kann, der Dekoder unmittelbar auf Dekodierung des Signals dieser Norm geschaltet wird, daß ferner Mittel (23, 22) vorgesehen sind, die die Vertikal-Ablenkfrequenz des Fernsehsignals ermitteln und die feststellen, ob der Farbhilfsträger eine von Zeile zu Zeile alternierende Phasenlage aufweist, und daß Mittel (24) vorgesehen sind, die diese Informationen in denjenigen Fällen, in denen der ermittelten und gegebenenfalls gemittelte Farbhilfsträgerfrequenz nicht eindeutig eine bestimmte Norm zugeordnet werden kann, zur Erkennung der Norm des zu dekodierenden Farbfernsehsignals heranziehen und die den Dekoder auf die erkannte Norm einstellen.

2.  Schaltungsanordnung nach Anspruch 1 mit einem digitalen Farbdekoder, in welchem zur Demodulation der Farbinformationen ein Quadraturmischer (3) und ein Mischeroszillator (4) vorgesehen sind,
    dadurch gekennzeichnet, daß zur Bestimmung der gegebenenfalls gemittelten Frequenz des Farbhilfsträgers ein Phasendemodulator (10) vorgesehen ist, dem die im Quadraturmischer (3) erzeugten Differenzsignale zugeführt werden und dem ein Differenzierer (14) nachgeschaltet ist, welcher ein Differenzsignal generiert, das während des Auftretens der Farbsynchronimpulse die Differenzfrequenz zwischen der Mischeroszillatorfrequenz und der gegebenenfalls gemittelten Farbhilfsträgerfrequenz des Farbfernsehsignals angibt, daß Mittel (25) zur Generierung eines Offset-Signals vorgesehen sind, welches die Differenzfrequenz zwischen einer vorgewählten, festen Normierungsfrequenz und der eingestellten Mischeroszillatorfrequenz angibt, daß das Differenzsignal und das Offset-Signal unter Berücksichtigung ihrer Vorzeichen addiert werden, wobei der Wert dieser Summe die Differenzfrequenz zwischen der gegebenenfalls gemittelten Farbhilfsträgerfrequenz des zu dekodierenden Farbfernsehsignals und der Normierungsfrequenz angibt.

3. Schaltungsanordnung nach Anspruch 1 oder 2,
dadurch gekennzeichnet, daß die Mittel (22) zur Bestimmung der alternierenden Phase des Farbhilfsträgers einen Phasendetektor aufweisen, welcher bei alternierender Phase des Farbhilfsträgers von Zeile zu Zeile differierende Phasenlage feststellt.

4. Schaltungsanordnung nach einem der Ansprüche 1 bis 3,
dadurch gekennzeichnet, daß zur Ermittlung der Vertikal-Ablenkfrequenz des Farbfernsehsignals ein Zähler vorgesehen ist, welcher die Zahl der Zeilen des Farbfernsehsignals zwischen zwei Vertikal-Synchronisationsimpulsen zählt, und daß aus der so ermittelten Zeilenzahl auf die Vertikal-Ablenkfrequenz des Farbfernsehsignals geschlossen wird.

5. Schaltungsanordnung nach Anspruch 2,
dadurch gekennzeichnet, daß die Normierungsfrequenz so gewählt wird, daß sie etwa einen Mittelwert der verschiedenen Farbhilfsträgerfrequenzen der zu erkennenden Normen darstellt.

6. Schaltungsanordnung nach Anspruch 2 oder 5,
dadurch gekennzeichnet, daß das Ausgangssignal des Phasendemodulators (10) in dem Farbdekoder auch zur Nachregelung der Phasenlage des Ausgangssignals des Mischeroszillators (4) herangezogen wird.

7. Schaltungsanordnung nach einem der Ansprüche 1 bis 6,
dadurch gekennzeichnet, daß jeweils mehrere Normen, die nahe beieinanderliegende Farbhilfsträgerfrequenzen haben, zu einer Normen-Gruppe zusammengefaßt werden, daß die Bestimmung der Frequenz des Farbhilfsträgers des Farbfernsehsignals nur mit solcher Genauigkeit vorgenommen wird, daß bestimmbar ist, zu welcher Normen-Gruppe das zu dekodierende Fernsehsignal gehört, und daß zur Erkennung der richtigen Norm innerhalb der Normen-Gruppe die ermittelte Vertikal-Ablenkfrequenz sowie das Phasenverhalten des Farbhilfsträgers herangezogen werden.

8. Schaltungsanordnung nach den Ansprüchen 2 und 7,
dadurch gekennzeichnet, daß für eine Normen-Gruppe nur ein gemeinsames Offset-Signal in der Weise generiert wird, daß, wenn der Mischoszillator auf eine der Farbhilfsträgerfrequenzen der Norm dieser Gruppe eingestellt ist, das Offset-Signal die Differenzfrequenz zwischen der vorgewählten, festen Normierungsfrequenz und einem mittleren Wert der Farbhilfsträgerfrequenzen der Normen dieser Gruppe angibt.

9. Schaltungsanordnung nach Anspruch 8,
dadurch gekennzeichnet, daß die Auswertung des Summensignals aus Differenzsignal und Offset-Signal nur mit einer solchen Genauigkeit vorgenommen wird, daß festgestellt werden kann, zu welcher Normen-Gruppe das Farbfernsehsignal gehört.

10. Schaltungsanordnung nach einem der Ansprüche 1 bis 9,
dadurch gekennzeichnet, daß es sich bei dem Farbfernsehsignal um ein digitales Signal und bei der Schaltungsanordnung zur Erkennung der Übertragungsnorm um eine digitale Schaltungsanordnung handelt.

## Claims

1. A circuit arrangement for identifying in a color decoder, the transmission standard of a color television signal comprising a chrominance subcarrier upon which chrominance information is modulated, and color synchronizing pulses, characterized in that means (14, 21, 24, 25) for determining the frequency of the chrominance subcarrier are provided which, at a frequency of the chrominance subcarrier which alternates from line to line of the color television signal determine the mean average of the two chrominance subcarrier frequencies, that in those cases in which the determined and optionally averaged chrominance subcarrier frequencies can accurately be assigned to precisely one of the transmission standards to be identified even when the measuring inaccuracy occurring during the determination of the chrominance subcarrier frequency is taken into account, the decoder is immediately switched to the decoding of the signal of this standard, that furthermore means (23, 22) are provided which determine the vertical deflection frequency of the television signal and ascertain whether the chrominance subcarrier has a line-sequentially alternating phase, and that means (24) are provided which in those cases in which the determined and optionally averaged chrominance subcarrier frequency cannot unambiguously be assigned to a given standard, utilize this information to identify the standard of the color television signal to be decoded and adjust the decoder to the identified standard.

2. A circuit arrangement as claimed in Claim 1, including a digital color decoder in which for demodulating the color information components a quadrature mixer (3) and a mixer oscillator (4) are provided, characterized in that for the determination of the optionally averaged frequency of the chrominance subcarrier a phase demodulator (10) is provided to which the difference signals produced in the quadrature mixer (3) are applied and subsequent to which there is arranged a differentiator (14) which generates a difference signal which during the occurrence of the color synchronizing pulses indicates the difference frequency between the mixer oscillator frequency and the optionally averaged chrominance subcarrier frequency of the color television signal, that means (25) for producing an offset signal are provided which indicate the difference frequency between a preset, fixed standard frequency and the adjusted mixer oscillator frequency, that the difference signal and the offset signal are added together taking their sign into account, the value of this sum indicating the difference frequency between the optionally averaged chrominance subcarrier frequency of the color television signal to be decoded and the standard frequency.

3. A circuit arrangement as claimed in Claim 1 or 2, characterized in that the means (22) for determining the alternating phase of the chrominance subcarrier include a phase detector which in the case of an alternating phase of the chrominance subcarrier determines the from line to line differing phase.

4. A circuit arrangement as claimed in any one of the Claims 1 to 3, characterized in that to determine the vertical deflection frequency of the color television signal a counter is provided which counts the number of lines of the color television signal between two vertical synchronizing pulses, and that the vertical deflection frequency of the color television signal can be concluded from the line number thus determined.

5. A circuit arrangement as claimed in Claim 2, characterized in that the standard frequency is chosen such that it represents approximately an average value of the different chrominance subcarrier frequencies of the standards to be identified.

6. A circuit arrangement as claimed Claim 2 or 5, characterized in that the output signal of the phase demodulator (10) is also used in the color decoder for a readjustment of the phase of the output signal of the mixer oscillator (4).

7. A circuit arrangement as claimed in any one of the Claims 1 to 6, characterized in that several standards having chrominance subcarrier frequencies which are very near to each other are combined into one standards group, that the determination of the frequency of the chrominance subcarrier of the color television signal is only effected with such an accuracy that it can be determined to which standards group the television signal to be decoded belongs, and that for the identification of the correct standard within the standards group the determined vertical deflection frequency and also the phase behavior of the chrominance subcarrier are used.

8. A circuit arrangement as claimed in Claims 2 and 7, characterized in that for a standards group only one common offset signal is generated in such a manner that when the mixer oscillator is adjusted to one of the chrominance subcarrier frequencies of the standard of this group, the offset signal indicates the difference frequency between the preset fixed standard frequency and an average value of the chrominance subcarrier frequencies of the standards of this group.

9. A circuit arrangement as claimed in Claim 8, characterized in that the evaluation of the sum signal of the difference signal and the offset signal is only effected with such accuracy that it can be determined to which standards group the color television signal belongs.

10. A circuit arrangement as claimed in any one of the Claims 1 to 9, characterized in that the color television signal is a digital signal and the circuit arrangement for identifying the transmission standard is a digital circuit arrangement.

**Revendications**

1. Montage de circuit pour la reconnaissance de la norme de transmission d'un signal de télévision en couleurs qui présente une sous-porteuse couleur sur laquelle sont modulées des informations de couleur et des impulsions de synchronisation de couleur, dans un décodeur de couleur, caractérisé en ce que sont prévus des moyens (14, 21, 24, 25) pour la détermination de la fréquence de la sous-porteuse couleur qui, dans le cas d'une fréquence de la sous-porteuse couleur qui alterne d'une ligne à l'autre du signal de télévision en couleurs, déterminent la valeur moyenne des deux fréquences de sous-porteuses couleur, que, dans les cas où la fréquence de la sous-porteuse couleur déterminée et éventuellement présentée en valeur moyenne, même en tenant compte de l'imprécision de mesure de la détermination de la fréquence de la sous-porteuse couleur, ne peut être associée avec précision qu'à l'une des normes à reconnaître, le décodeur est immédiatement commuté sur le décodage du signal selon cette norme, que sont, en outre, prévus des moyens (23, 22) qui déterminent la fréquence de déviation verticale du signal de télévision et qui établissent si la sous-porteuse couleur présente une position de phase alternant d'une ligne à l'autre et que sont prévus des moyens (24) qui, dans les cas où la fréquence de sous-porteuse couleur déterminée et éventuellement présentée en valeur moyenne ne peut pas être associée de manière univoque à une certaine norme, utilisent ladite information pour reconnaître la norme du signal de télévision en couleurs à décoder et qui règlent le décodeur sur la norme reconnue.

2. Montage de circuit suivant la revendication 1, comportant un décodeur couleur numérique dans lequel sont prévus, pour la démodulation des informations couleur, un mélangeur en quadrature (3) et un oscillateur-mélangeur (4), pour la détermination de la fréquence de la sous-porteuse couleur éventuellement en valeur moyenne est prévu un démodulateur de phase (10) qui reçoit les signaux de différence produits dans le mélangeur en quadrature (3) et qui est suivi d'un élément différenciateur qui génère un signal de différence qui indique, pendant l'apparition des impulsions de synchronisation couleur, la fréquence de différence entre la fréquence de l'oscillateur-mélangeur et la fréquence de sous-porteuse couleur du signal de télévision en couleurs éventuellement en valeur moyenne, que sont prévus des moyens (25) pour générer un signal de décalage qui indique la fréquence de différence entre une fréquence de normalisation sélectionnée fixe et la fréquence d'oscillateur-mélangeur réglée, que le signal de différence et le signal de décalage sont additionnés en tenant compte de leurs signes, la valeur de cette somme indiquant la fréquence de différence entre la fréquence de sous-porteuse couleur éventuellement en valeur moyenne du signal de télévision couleur à décoder et la fréquence de normalisation.

3. Montage de circuit suivant la revendication 1 ou 2, caractérisé en ce que les moyens (22) pour la détermination de la phase alternante de la sous-porteuse couleur présentent un détecteur de phase qui établit en cas de phase alternante de la sous-porteuse couleur une position de phase différant d'une ligne à l'autre.

4. Montage de circuit suivant l'une quelconque des revendications 1 à 3, caractérisé en ce que pour la détermination de la fréquence de déviation verticale du signal de télévision en couleurs est prévu un compteur qui compte le nombre de lignes du signal de télévision en couleurs séparant deux impulsions de synchronisation verticale et que le nombre de lignes ainsi déterminé permet de prendre une décision au sujet de la fréquence de déviation verticale du signal de télévision en couleurs.

5. Montage de circuit suivant la revendication 2, caractérisé en ce que la fréquence de normalisation est choisie telle qu'elle représente à peu près une valeur moyenne des diverses fréquences de sous-porteuses couleur des normes à reconnaître.

6. Montage de circuit suivant la revendication 2 ou 5, caractérisé en ce que le signal de sortie du démodulateur de phase (10) est utilisé dans le décodeur de couleur également pour le postréglage de la position de phase du signal de sortie de l'oscillateur-mélangeur (4).

7. Montage de circuit suivant l'une quelconque des revendications 1 à 6, caractérisé en ce que plusieurs normes qui présentent chaque fois des fréquences de sous-porteuses couleur très proches sont rassemblées en un groupe de normes, que la détermination de la fréquence de la sous-porteuse couleur du signal de télévision en couleurs n'est effectuée qu'avec une précision telle que puisse être déterminé à quel groupe de normes appartient le signal de télévision à décoder et que pour la reconnaissance de la norme correcte dans le groupe de normes, la fréquence de déviation verticale déterminée ainsi que le comportement en phase de la sous-porteuse couleur sont utilisés.

8. Montage de circuit suivant les revendications 2 et 7, caractérisé en ce que pour un groupe de normes, seul un signal de décalage commun est généré de manière telle que lorsque l'oscillateur-mélangeur est réglé sur l'une des fréquences de sous-porteuses couleur de la norme de ce groupe, le signal de décalage indique la fréquence de différence entre la fréquence de normalisation présélectionnée fixe et une valeur moyenne des fréquences de sous-porteuses couleur des normes de ce groupe.

9. Montage de circuit suivant la revendication 8, caractérisé en ce que l'évaluation du signal de somme à partir du signal de différence et du signal de décalage ne doit être effectuée qu'avec une précision suffisante pour que puisse être établi à quel groupe de normes appartient le signal de télévision en couleurs.

10. Montage de circuit suivant l'une quelconque des revendications 1 à 9, caractérisé en ce que le signal de télévision en couleurs est un signal numérique et le montage de circuit pour la reconnaissance de la norme de transmission est un montage de circuit numérique.